# EUROPEAN PATENT APPLICATION

(11) **EP 3 363 840 A1**
(43) Date of publication of application: **22.08.2018**
(21) Application number: 17156684.7
(22) Date of filing: 17.02.2017
(51) Int. Cl.: C08G 18/76, C08G 18/12, C08G 18/20, C08G 18/42, C09J 175/04, C09D 175/04

(54) **TWO-COMPONENT POLYURETHANE COMPOSITION COMPRISING A LATENT CATALYST**

(71) Applicant: Henkel AG & Co. KGaA, 40589 Düsseldorf (DE)
(72) Inventor: ZHAO, Ligang, 40593 Düsseldorf (DE); DEL RIO NIETO, Enrique, 37764 Valero (ES); VERA SAZ, Francisco, 50018 Zaragoza (ES); BERGES, Christina, 500010 Zaragoza (ES); ZÖLLER, Thomas, 45276 Essen (DE); PÖLLER, Sascha, 40589 Düsseldorf (DE); GARMANN, Helga, 40724 Hilden (DE); ENGELS, Thomas, 40589 Düsseldorf (DE); KINZELMANN, Hans-Georg, 50259 Pulheim (DE)

(57) **Abstract**

The present application relates to a two-component (2K) polyurethane composition comprising component (I) and component (II), wherein component (I) comprises an aromatic polyisocyanate and component (II) comprises a polyol, said composition being characterized in that it comprises a metal-free, latent catalyst which is activatable under ultraviolet irradiation, said catalyst comprising at least one nitrogen heterocyclic compound bearing an aromatic photoremovable group, the release of said group under UV irradiation yielding a tertiary amine. In an important embodiment, the metal-free latent catalyst is a monocyclic or bicyclic nitrogen heterocycle in which said aromatic photoremovable group (PRG) is directly bonded to a nitrogen disposed in a ring and is represented by the formula:

-CR¹R²-Ar (PRG)

wherein: R¹ and R² are independently of one another hydrogen or C1-C6 alkyl; Ar represents an aryl group having from 6 to 18 ring carbon atoms, which aryl group may be unsubstituted or may be substituted by one of more C1-C6 alkyl group, C2-C4 alkenyl group, CN, OR³, SR³, CH₂OR³, C(O)R³, C(O)OR³ or halogen; and, where present, each R³ is independently selected from the group consisting of hydrogen, C1-C6-alkyl and phenyl.

## Description

### FIELD OF THE INVENTION

This application is directed to two-component (2K) polyurethane compositions of which the first component comprises an aromatic polyisocyanate and the second component (II) comprises a polyol. More particularly, the application is directed to such two-component (2K) compositions which further comprise a metal-free, latent catalyst which is activatable under ultraviolet irradiation.

### BACKGROUND TO THE INVENTION

The use of polyurethanes in adhesive formulations is well-known and long established. Such polyurethanes contain precursor materials that cure in place to form an adhesive layer. A given polyurethane adhesive can be formulated to cure at room temperature or upon exposure to certain physicochemical conditions: as the adhesive cures, it can form a strong adhesive bond to many types of substrates.

Whilst one-component (1 K) polyurethane adhesives-which exhibit a moisture cure or a heat activated cure, for instance - are of course known, the present invention is concerned with two component (2K) compositions. These two-component compositions comprise a first or resin component that includes one or more polyisocyanate compounds, and a second or curative component that includes one or more isocyanate-reactive compounds, such as polyols: when the two components are mixed, the polyisocyanates and polyols react to form a cured polyurethane adhesive.

When the polyaddition reaction of polyisocyanates with polyols is performed under catalyst-free conditions the nucleophilic center of the polyol adds to the electrophilic carbon of the isocyanate group, followed by hydrogen shuffling to the nitrogen forming the urethane bond. Unfortunately, this reaction can be slow which translates in practice to two component (2K) polyurethane adhesives and coatings which exhibit lengthy drying times: the adhesive composition can take hours to become tack-free and days to harden completely.

The hardening rate can be accelerated by adding a suitable catalyst or initiator and, indeed, a catalyst will often be required to achieve high molecular weight polyurethanes. Nominally, a catalyst be selected to operate in one of two following ways: activating the alcohol (nucleophilic activation) or the isocyanate (electrophilic activation). In practice, it is observed that the standard catalysts used today for the curing of two (2K) are based on organometallic and, in particular, tin (Sn) compounds. Tin catalysts are known from many publications: US Patent No. 6,316,535 B1 and US Patent No. 5,545,600 B1 are mentioned merely for illustration. The activation mechanism of said tin compounds is still questioned, but the mechanism proposed Bloodworth and Davies outlined in Chem. Rev. 2012, 113 (1) 80-118 appears realistic based on kinetic data.

The standard tin and other organometallic catalysts are not latent and thus the reaction between the polyol and the polyisocyanates is accelerated as soon as the catalyst is added. After a short reaction time - usually from 30 to 120 minutes, depending on the reactant concentrations and the conditions - the reaction is completed. This reaction time limits the working time of the adhesive composition after the mixture has been produced: this problematic effect is seen, in particular, with adhesive compositions based on aromatic polyisocyanates and polyols, which components show high reactivity in the presence of dibutyltin dilaureate. As such, it can be acknowledged that the use of conventional organometallic catalysts to accelerate the cross-linking reaction is limited by the balance between fast and efficient curing and sufficient pot-life for handling. Often a formulator will employ a sub-optimal amount of catalyst in the adhesive composition and use heat during the curing step to shorten the curing time as a compensation for using too little catalyst.

With this in mind, it is clearly desirable to be able to initiate the reaction "on demand" through activation of the catalyst by an external stimulus, such as heat, oxygen or light. This would allow for an extension of the working window with the adhesive composition, optimally until the external activation is actuated.

US Patent No. 3,523,103 (Zemlin et al.) describes a process for making a cured polymer by forming a mixture of an organic polyisocyanate and an active hydrogen compound, in which mixture is disposed a latent catalyst consisting of either hexa-n-butylditin or hexaphenylditin: said catalysts are ineffective to cure at room temperature but active upon heating the mixture to a temperature of at least 100°C. Such thermal activation of the type described in this citation is characterized by additional energy consumption and the elevated (catalyst deblocking) temperature can promote undesired side reactions.

EP 2203496 (BASF SE) describes organometallic latent catalyst compounds containing Sn, Bi, Zr, Ti or Al and which are suitable as catalysts in polyaddition or polycondensation reactions which are catalyzed by a Lewis acid type catalyst; the catalysts find particular utility for the crosslinking of a blocked or unblocked isocyanate or isothiocyanate component with a polyol or polythiol to form a polyurethane (PU). Whilst this citation proposes alternatives to the use of catalytic tin compounds - the environmental impact of said tin compounds being the driver for their regulated reduction or elimination from adhesive compositions - the use of alternative catalytic organometallic compounds is not necessarily desirable: the metallic elements, remaining in the cured product, can be deleterious to certain applications of the adhesive compositions in the healthcare, personal care and food packing industries.

US Patent No. 6,187,711 B1 (Assigned to Rhodia Chemie SA) discloses tin derivatives having the general formula R¹-Yₙ-R⁴ wherein: R¹ and R⁴ together form a divalent group or a single bond which ensures the formation of a ring; n is 5, 6 or 7; and, radicals Y, which may be the same or different, represent a tin-membered chain unit of a structure R'-Sn-R", wherein R' and R", which may be the same or different are a hydrogen or a hydrocarbon radical. Said tin derivatives find utility as oxygen-activated latent polycondensation catalysts. However, whilst the use - in this manner - of air (oxygen) as an external stimulus to trigger the active form of the latent catalyst appears prudent in theory, it is considered difficult in practice to ensure a defined and reproducible migration of atmospheric oxygen at ambient conditions.

US Patent No. 4,742,113 (Assigned to Lord Corporation) discloses a two-component aromatic polyurethane adhesive comprising: a) at least one organic polyisocyanate compound; b) a polyol comprising at least one polymeric polyol comprising a graft copolymer of a poly(alkylene oxide) polyol and a vinyl monomer selected from acrylonitrile or a mixture of acrylonitrile and stryrene; and, c) a latent catalyst for the reaction of the isocyanate groups of said polyisocyanate and the hydroxyl groups of said polyol. The latent catalyst is selected from the group consisting of acid-blocked or phenol-blocked salts of bicyclic amidine compounds.

WO 01/92362 A1 (Akzo Nobel NV) describes a photo-activatable coating composition comprising at least one photo-initiator and a base-catalyzed polymerizable or curable organic material comprising at least one polyisocyanate and at least one compound containing isocyanate reactive groups, wherein the isocyanate reactive groups comprise at least one thiol group and the photo-initiator is a photo-latent base. Preference is given to a coating composition wherein the photo-latent base is selected from the group of N-substituted 4-(ortho-nitrophenyl) dihydropyridine, a quaternary organo-boron photo-initiator, and an alpha-amino acetophenone. The composition additionally may comprise one or more of: an organic acid; a metal complex and / or a metal salt as a co-catalyst; and a sensitizer selected from the group of thioxanthones, oxazines, rhodamines, and preferably from the group of benzophenone and derivatives thereof.

US Patent No. 5,091,439 (Berner et al.) describes compounds of the formula [(R¹)Fe(II)(R²)]^{a+}[X]^{a-} (I) in which: a is 1, 2, or 3; R¹ is an uncharged, unsubstituted or substituted carbocyclic or heterocyclic aromatic ring; R² is an unsubstituted or substituted cyclopentadienyl or indenyl anion; and, |X|^{a-} is an a-valent anion. Said compounds are disclosed as being suitable for use as latent curing catalysts for two-component polyurethane coatings which are activated by irradiation with actinic light or by heating.

### STATEMENT OF THE INVENTION

In accordance with a first aspect of the present invention, there is provided a two-component (2K) polyurethane composition comprising component (I) and component (II), wherein component (I) comprises an aromatic polyisocyanate and component (II) comprises a polyol, said composition being characterized in that it comprises a metal-free, latent catalyst which is activatable under ultraviolet irradiation, said catalyst comprising at least one nitrogen heterocyclic compound bearing an aromatic photoremovable group, the release of said group under UV irradiation yielding a tertiary amine.

The present invention thus focuses on the use of ultraviolet light as an external stimulus which activates the metal-free latent catalyst on demand, after the mixture of the two components of the composition. The composition may be free of organometallic species and can be cured in a versatile manner which is not limited by the migration of external agents such as water or oxygen through the composition. The compositions can in addition be cured in an energy efficient manner, at low temperatures, including room temperature.

The aromatic polyisocyanate of component (I) may be monomeric and may, in particular, be selected from the group consisting of: 2,4-tolylene diisocyanate; 2,6-tolylene diisocyanate; 2,4'-methylene diphenyl diisocyanate; 4,4'-methylene diphenyl diisocyanate; 1,3-phenylene diisocyanate; and, 1,4-phenylene diisocyanate and mixtures thereof. Equally, component (I) may comprise a (methylene bridged) polymethylenepolyphenyl polyisocyanate having an average isocyanate functionality greater than 2.

In a further embodiment, the aromatic polyisocyanate of component (I) comprises a pre-polymer having free NCO groups, said pre-polymer being obtained from at least one reactant (A) comprising a compound reactive toward isocyanates and at least one reactant (B) comprising a compound bearing isocyanate group(s). Desirably, said pre-polymer having free NCO groups is characterized by: i) an NCO content of from 5 to 30%, preferably from 10 to 25% by weight, based on the pre-polymer; ii) a functionality of from 2.0 to 3, preferably from 2.2 to 3; and, iii) a viscosity at 20°C of from 300 to 35,000 mPa.s, preferably from 1000 to 10,000 mPa.s.

Having regard to component (II) of the adhesive composition, it is preferred that the constituent polyol comprises at least one polymeric compound characterized by one or both of: i) an average OH functionality of from 1.5 to 4.0, preferably from 1.8 to 3.5; and, ii) an equivalent weight of from 200 to 5000, preferably from 500 to 2500 g/eq.

It is noted that the molar ratio of isocyanate groups (NCO) in component (I) to hydroxyl groups (OH) in component (II) of the composition should typically be in the range from 0.8:1 to 2.5:1, preferably from 1.3:1 to 1.8:1.

The metal-free, latent catalyst, which is preferentially disposed at least in part in component (II) of the composition, is in one important embodiment a monocyclic or bicyclic nitrogen heterocycle in which said aromatic photoremovable group (PRG) is directly bonded to a nitrogen disposed in a ring and is represented by the formula

-CR¹R²-Ar (PRG)

wherein:
R¹ and R² are independently of one another hydrogen or C1-C6 alkyl;
Ar represents an aryl group having from 6 to 18 ring carbon atoms, which aryl group may be unsubstituted or may be substituted by one of more C1-C6 alkyl group, C2-C4 alkenyl group, CN, OR³, SR³, CH₂OR³, C(O)R³, C(O)OR³ or halogen; and,
where present, each R³ is independently selected from the group consisting of hydrogen, C1-C6-alkyl and phenyl.

The second aspect of the present invention provides for the use of the two-component composition, as defined hereinabove and in the appended claims, as an adhesive for laminating flexible films.

In accordance with a third aspect of the present invention, there is provided a method of forming a flexible film laminate, said method comprising the steps of:
providing first and second flexible films;
at a predetermined weight ratio, combining component (I) and component (II) of the composition as defined hereinabove and in the appended claims to form a curable adhesive mixture;
disposing the adhesive mixture on at least a portion of one surface of the first flexible film;
joining the first flexible film and a second flexible film so that the curable adhesive mixture is interposed between the first flexible film and the second flexible film; and,
simultaneously with or subsequent to said joining step, irradiating said adhesive mixture with ultraviolet light to cure said mixture.

The ability to irradiate the adhesive mixture after said joining step is facilitated where at least one of said first and second flexible films is transparent to ultraviolet light and the adhesive mixture may thus be irradiated with ultraviolet light through the transparent film or films.

The irradiating ultraviolet light should have a wavelength of from 150 to 600 nm, preferably from 200 to 450 nm. Alternatively or additionally, the irradiating ultraviolet light should have an energy of from 5 to 500 mJ/cm², preferably from 10 to 200 mJ/cm², based on the area of the irradiated film.

### DEFINITIONS

As used herein, the singular forms "a", "*an*" and "*the*" include plural referents unless the context clearly dictates otherwise.

The terms *"comprising*"*,* "*comprises*" and "*comprised* of" as used herein are synonymous with "*including*"*,* "*includes*"*,* "*containing*" or "*contains*"*,* and are inclusive or open-ended and do not exclude additional, non-recited members, elements or method steps.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The words "*referred*"*,* "*preferably*" and "*particularly*" are used frequently herein to refer to embodiments of the disclosure that may afford particular benefits, under certain circumstances. However, the recitation of one or more preferable or preferred embodiments does not imply that other embodiments are not useful and is not intended to exclude those other embodiments from the scope of the disclosure.

The molecular weights given in the present text refer to number average molecular weights (Mn), unless otherwise stipulated. All molecular weight data refer to values obtained by gel permeation chromatography (GPC), unless otherwise stipulated.

Two-component compositions in the context of the present invention are understood to be compositions in which the component comprising said polyisocyanate compound and the component comprising the polyol must be stored in separate vessels because of their reactivity. The two components are mixed only shortly before application and then react, under catalysis, with bond formation and thereby formation of a polymeric network.

As used herein, "*aliphatic group*" means a saturated or unsaturated linear (i.e., straight-chain), branched, cyclic (including bicyclic) organic group: the term "*aliphatic group*" thus encompasses "*alicyclic group*"*,* the latter being a cyclic hydrocarbon group having properties resembling those of an aliphatic group.

As used herein, "*C₁-C₆alkyl*" group refers to a monovalent group that contains 1 to 6 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; and, n-hexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1-6 carbon atoms (C₁-C₆ alkyl) - for example unsubstituted alkyl groups containing from 1 to 4 carbon atoms (C₁-C₄ alkyl) or 1 or 2 carbon atoms (C₁-C₂ alkyl) - should be noted.

The term "C₂-C₆ *alkylene group*" refers to a divalent group that contains from 2 to 6 carbon atoms, that is a radical of an alkane and includes linear and branched organic groups, which groups may be substituted or substituted. In general, a preference for unsubstituted alkylene groups containing from 2-6 carbon atoms (C₂-C₆ alkylene) - for example unsubstituted alkylene groups containing from 2 to 4 carbon atoms (C₂-C₄ alkylene) - should be noted.

As used herein, "*C₂-C₄ alkenyl*" group refers to an aliphatic carbon group that contains 2 to 4 carbon atoms and at least one double bond. Like the aforementioned alkyl group, an alkenyl group can be straight or branched, and may optionally be substituted. Examples of C₂-C₄ alkenyl groups include, but are not limited to: allyl; isoprenyl; and, 2-butenyl.

As used herein, the term "*aryl*" refers to an aromatic ring wherein each of the atoms forming the ring is a carbon atom. Aryl rings can be formed by five, six, seven, eight, nine, or more than nine carbon atoms. Aryl groups can be optionally substituted. Examples of aryl groups include, but are not limited to phenyl, naphthalenyl, phenanthrenyl, anthracenyl, fluorenyl, and indenyl. Depending on the structure, an aryl group can be a monoradical or a diradical (i.e., an arylene group).

By the term "*arylaliphatic*" is meant a hydrocarbon moiety, in which one or more aromatic moieties are substituted with one or more aliphatic groups. Thus the term "*arylaliphatic*" also includes hydrocarbon moieties, in which two or more aryl groups are connected via one or more aliphatic chain or chains of any length, for instance a methylene group.

The term "*aromatic polyisocyanate*" is used herein to describe organic isocyanates in which the isocyanate groups are directly attached to the ring(s) of a mono- or polynuclear aromatic hydrocarbon group. In turn the mono- or polynuclear aromatic hydrocarbon group means an essentially planar cyclic hydrocarbon moiety of conjugated double bonds, which may be a single ring or include multiple condensed (fused) or covalently linked rings. The term aromatic also includes alkylaryl. Typically, the hydrocarbon (main) chain includes 5, 6, 7 or 8 main chain atoms in one cycle. Examples of such moieties include, but are not limited to, cyclopentadienyl, phenyl, napthalenyl-, [10]annulenyl-(1,3,5,7,9-cyclodecapentaenyl-), [12]annulenyl-, [8]annulenyl-, phenalene (perinaphthene), 1,9-dihydropyrene, chrysene (1,2-benzophenanthrene). Examples of alkylaryl moieties are benzyl, phenethyl, 1-phenylpropyl, 2-phenylpropyl, 3-phenylpropyl, 1-naphthylpropyl, 2-naphthylpropyl, 3-naphthylpropyl and 3-naphthylbutyl.

For completeness: a) a primary amine group is an atomic grouping of the type "-NH₂" (R-H); (b) a secondary amine group is an atomic grouping of the type "-NHR"; c) a tertiary amine group is an atomic grouping of the type "-NR₂"; and, d) an amino group is understood to mean an atomic grouping of the type "-NH₂".

The term "*heterocyclic*" as used in the context of the present invention refers to compounds having saturated and unsaturated mono- or polycyclic cyclic ring systems having 3-16 atoms wherein at least one ring atom is nitrogen. Optionally, the nitrogen atom(s) may be oxidized. The ring systems may be optionally substituted with one or more functional groups, as defined herein.

As used herein "*halide*" refers to fluoride, chloride, bromide or iodide.

A "*compatible non-coordinating anion*" ("NCA") is defined herein as an anion which either does not coordinate the cation or which is only weakly coordinated to the cation. Further, the phrase "*compatible non-coordinating anion*" specifically refers to an anion which, when functioning as a stabilizing anion in the latent catalyst system of the present invention, does not irreversibly transfer an anionic substituent or fragment thereof to the cation thereby forming a neutral byproduct or other neutral compound.

As used herein "*hydrocarbyl*" refers to a monovalent, linear, branched or cyclic group which contains only carbon and hydrogen atoms. Substituted hydrocarbyl radicals are radicals in which at least one hydrogen atom has been substituted with at least one functional group.

"*Halocarbyl radicals*" are radicals in which one or more hydrocarbyl hydrogen atoms have been substituted with at least one halogen (e.g. F, Cl, Br, I) or halogen-containing group (e.g. CF₃). Substituted halocarbyl radicals are (halogen containing) radicals in which at least one halocarbyl hydrogen or halogen atom has been substituted with at least one functional group.

The term "*polyol*" as used herein shall include diols and higher functionality hydroxyl compounds.

The hydroxyl (OH) values given herein are measured according to Japan Industrial Standard (JIS) K-1557, 6.4.

The isocyanate content values given herein are measured according to EN ISO 11909.

Viscosities of the adhesive compositions and of pre-polymers as described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the pre-polymer are done using the No. 6 spindle at a speed of 20 revolutions per minute for 1 minute until the viscometer equilibrates. The viscosity corresponding to the equilibrium reading is then calculated using the calibration.

As used herein, "*anhydrous*" means the relevant composition includes less than 0.25% by weight of water. For example the composition may contain less than 0.1% by weight of water or be completely free of water. The term "*essentially free of solvent*" should be interpreted analogously as meaning the relevant composition comprises less than 0.25% by weight of solvent.

### DETAILED DESCRIPTION OF THE INVENTION

The invention will now be described with reference to a number of more detailed embodiments.

### First Component (I)

In a first embodiment of the composition of the present invention, component (I) may comprise at least one monomeric, aromatic polyisocyanate compound having an NCO functionality of from 2 to 5 or from 2 to 4. Examples of suitable monomeric, aromatic isocyanates include but are not limited to: 1,5-naphthylene diisocyanate; 2,2'-, 2,4'- or 4,4'-methylene diphenyl diisocyanate (MDI); carbodiimide-modified MDI; xylylene diisocyanate (XDI); m- and p-tetramethylxylylene diisocyanate (TMXDI); the isomers of tolylene diisocyanate (TDI); 4,4'-diphenyl-dimethylmethane diisocyanate; di- and tetraalkyldiphenylmethane diisocyanate; 1,3-phenylene diisocyanate; 1,4-phenylene diisocyanate; and, 4,4'-dibenzyl diisocyanate. A preference may be mentioned for component (I) comprising at least one aromatic polyisocyanate selected from the group consisting of: 2,4-tolylene diisocyanate; 2,6-tolylene diisocyanate; 2,4'-methylene diphenyl diisocyanate; 4,4'-methylene diphenyl diisocyanate; 1,3-phenylene diisocyanate; and, 1,4-phenylene diisocyanate.

In a secondary embodiment, component (I) may comprise a (methylene bridged) polymethylenepolyphenyl polyisocyanate having an average isocyanate functionality greater than 2. Methylene bridged polyphenyl polyisocyanates are well known in the art and have the following general formula: 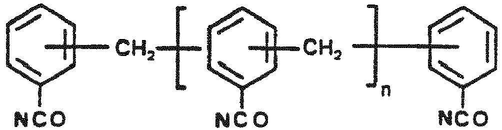 wherein:
n is an integer of ≥ 1 in the case of individual compounds; and,
n has an average value of ≥ 1 in the case of mixtures of such compounds.
The latter referred to mixtures are commonly termed as "crude MDI" or "polymeric MDI" in the art. The skilled artisan will also recognize that commercially available crude MDI may contain some amount of monomeric MDI (i.e. n=0).

For completeness, useful isocyanates meeting the above described embodiments are disclosed in *inter alia* US Patent Nos. 6,387,449, 6,355,317, 6,221,978, 4,820,368, 4,808,255, 4,775,719, and 4,352,858. Further, illustrative commercially available compounds include aromatic isocyanates provided under the trade designations MONDUR ML available from Bayer Chemicals (Pittsburgh, Pa.), ISONATE 50 OP and ISONATE 125M available from Dow Chemical Company (Midland, Mich.), and LUPRANATE MI available from BASF (Germany).

In a further embodiment, component (I) may comprise a pre-polymer having free NCO groups, said pre-polymer being obtained from at least one reactant (A) comprising a compound reactive toward isocyanates and at least one reactant (B) comprising a compound bearing isocyanate group(s).

The pre-polymers should have an average isocyanate functionality which is sufficient to allow the preparation of a crosslinked polyurethane upon cure but not so high that the polymers are unstable. Stability in this context means that either the pre-polymer or the component (I) comprising said pre-polymer has a shelf life of at least 2 months at ambient temperatures, in that it does not demonstrate an increase in viscosity during such period which prevents its application or use. Preferably the pre-polymer or component (I) prepared therefrom does not undergo an increase in viscosity of more than about 50 percent during the stated period.

Generally the average isocyanate functionality of the pre-polymer is at least about 2.0, preferably at least 2.2 and more preferably at least 2.4; below about 2.0 and often below 2.2, the adhesives obtained upon crosslinking of the pre-polymer tend to be too soft or elastic and in, some instances, the strength of the cured adhesive may be compromised. Further, the average isocyanate functionality of the pre-polymer is generally 3.0 or less, and more preferably 2.9 or less; above 3.0 average isocyanate functionality the pre-polymer and adhesives prepared from the pre-polymer may exhibit unacceptable stability.

The pre-polymer may also be characterized by its NCO content, which should be at a level which facilitates both acceptable strength in adhesives prepared from the pre-polymers after 60 minutes and stability of the pre-polymer. The NCO isocyanate content should typically be in the range from 5 to 30% by weight of the pre-polymer, preferably be from 10 to 25% by weight, and more preferably from 15 to 25% by weight. Above 30% NCO content by weight the adhesive compositions prepared from the pre-polymer may demonstrate lap shear strengths after 60 minutes which are too low for the intended use; some foaming during cure of the adhesive composition prepared from the pre-polymer may also occur. At an NCO content below 5% by weight isocyanate content, the pre-polymer may exhibit instability, such as gelling within 1 to 3 days.

The pre-polymer should exhibit a viscosity which facilitates the formulation of a stable, pumpable, non-gelling adhesive composition which has good green strength. In this regard, the viscosity of the pre-polymer should generally be from 300 to 35,000 mPa.s, preferably be from 1,000 to 30,000 mPa.s, and more preferably be from 1,000 to 10,000 mPas. The viscosity of the adhesive composition can of course be adjusted with fillers but these cannot contribute to the green strength of the final adhesive.

Collectively, the pre-polymer should preferably be characterized by: i) an NCO content of from 5 to 30%, preferably from 10 to 25% by weight, based on the pre-polymer; ii) a functionality of from 2.2 to 3.0, preferably from 2.2 or 2.4 to 2.9; and, iii) a viscosity at 20°C of from 300 to 35,000 mPa.s, preferably from 1,000 to 10,000 mPa.s. These properties may be found by using known commercially available pre-polymers. Alternatively, the aforementioned components A and B may be reacted in a ratio and under conditions such that these properties are achieved in the resultant pre-polymer.

As an alternative characterization, which is not intended to be mutually exclusive of the above characterizations, the polyurethane pre-polymers used in the present invention may typically have a number average molecular weight (Mn) of from 500 to 30,000, for example from 500 to 15,000 or from 500 to 10,000 g/mol.

The reactant (B) used in preparing the pre-polymer includes at least one aromatic polyisocyanate: this does not preclude the reactant (B) further comprising one or more aliphatic, cycloaliphatic, arylaliphatic or heterocyclic polyisocyanate. Each reacting polyisocyanate should have an average isocyanate functionality of at least about 2.0 and an equivalent weight of at least about 80. The isocyanate functionality of the polyisocyanates will more generally be from about 2.2 to 4.0, for example 2.3 to 3.5. Whilst functionalities greater than 4.0 may be used, their use can cause excessive crosslinking, resulting in an adhesive composition which is too viscous to handle and apply easily; further, the cured adhesive may be too brittle and cause foaming due to carbon dioxide gassing. The equivalent weight of the polyisocyanate is typically from 100 to 300, preferably from 110 to 250, and more preferably from 120 to 200.

The polyisocyanates, where required, may have been biuretized and / or isocyanurated by generally known methods, such as described in UK Patent No. 889,050.

For reactant (B), examples of suitable aromatic isocyanates include but are not limited to: 1,5-naphthylene diisocyanate; 2,2'-, 2,4'- or 4,4'-methylene diphenyl diisocyanate (MDI); polymeric MDI; carbodiimide-modified MDI; xylylene diisocyanate (XDI); m- and p-tetramethylxylylene diisocyanate (TMXDI); the isomers of tolylene diisocyanate (TDI); 4,4'-diphenyl-dimethylmethane diisocyanate; di- and tetraalkyldiphenylmethane diisocyanate; 1,3-phenylene diisocyanate; 1,4-phenylene diisocyanate; 4,4'-dibenzyl diisocyanate; triphenyl methane-4,4',4'-tri-isocyanate; and, polyphenyl polymethylene polyisocyanates of the type obtained by condensing aniline with formaldehyde, followed by phosgenation such as described in UK Patent Nos. 874,430 and 848,671.

Exemplary further polyisocyanates which may be included in reactant (B) include but are not limited to: ethylene diisocyanate; 1,4-tetramethylene diisocyanate; hexamethylene diisocyanate (HDI); biuret our trimmers of HDI; 1,12-dodecane diisocyanate, cyclobutane-1,3-diisocyanate cyclohexane-1,3- and 1,4-diisocyanate and mixtures of these isomers; 1-isocyanato-3,3,5-trimethyl-5-isocyanato methyl cyclohexane; 2,4- and 2,6-hexahydrotolylene diisocyanate and mixtures of these isomers; hexahydro 1,3- and/or 1,4-phenylene diisocyanate; and, perhydro-2,5'- and/or 4,4'-diphenyl methane diisocyanate.

Di- and / or polyisocyanates comprising ester, urea, allophanate, carbodiimide, uretdione and / or urethane groups may also be used in the process according to the invention.

Where reactant (B) is a mixture consisting of aromatic polyisocyanates and one or more aliphatic, cycloaliphatic, arylaliphatic or heterocyclic polyisocyanate, it is preferred that said aromatic polyisocyanates constitute at least 50 mol.%, preferably at least 75 mol.% of said mixture.

The term isocyanate-reactive compound (A) as used herein includes water and any organic compound having, on average, more than one and preferably from 2 to 4 isocyanate-reactive moieties. These are generally compounds containing an active hydrogen moiety. Illustrative of active hydrogen moieties are - COOH, -OH, -NH₂, -NH-, -CONH₂, -SH, and -CONH and typical active hydrogen-containing compounds include polyols, polyamines, polymercaptans, polyacids and compounds containing at least one oxazolidine moiety.

Customarily the reactant (A) will comprise one or more polyols, said polyols preferably having from 2 to 4 isocyanate-reactive hydroxyl moieties. Without specific intention to limit the present invention, suitable polyols include all those described herein below with respect to component (II) of the present composition. As such, the polyol may, for instance, be a mixture of one or more diols and one or more triols. And the polyols may include polyether polyols, polyester polyols, poly(alkylene carbonate)polyols, hydroxyl-containing polythioethers, polymer polyols, and mixtures thereof. The hydroxyl number of the polyhydroxy compounds is generally from 20 to 850 mg KOH/g and preferably from 25 to 500 mg KOH/g.

The polyols are present in an amount sufficient to react with most of the isocyanate groups of the isocyanates leaving enough isocyanate groups to correspond with the desired free isocyanate content of the pre-polymer. And in that embodiment where the polyols comprise a mixture of diols and triols, the proportion of diol to triol must be chosen to achieve the desired isocyanate functionality of the pre-polymer.

Starting from components A and B as defined above, the polyurethane pre-polymer may be prepared by any suitable method, such as bulk polymerization and solution polymerization. The reaction to prepare the pre-polymer is carried out under anhydrous conditions, for instance under a nitrogen blanket, to prevent cross-linking of the isocyanate groups by atmospheric moisture.

In a standard pre-polymer synthesis, the compounds or polymers containing isocyanate-reactive groups are first heated in the absence of catalyst to a temperature of from 45 to 55°C. The polyisocyanate is then added under mixing to ensure it is evenly dispersed in the reaction mixture. Thereafter a polyurethane catalyst may be added. After addition of the catalyst, an exotherm generally results; in this case, the temperature of the reaction mixture may have to be lowered to ensure that it is does not gel. Plasticizer may be added after the exotherm recedes to dilute the reactants and quench the reaction. The reaction should be run such that all free isocyanate-reactive moieties are reacted with isocyanate moieties.

Standard polyurethane catalysts include: the stannous salts of carboxylic acids, such as stannous octoate, stannous oleate, stannous acetate, and stannous laureate; dialkyltin dicarboxylates, such as dibutyltin dilaureate and dibutyltin diacetate; tertiary amines; alkanolamine compounds; 2,3-dimethyl-3,4,5,6-tetrahydropyrimidine; tetraalkylammonium hydroxides; alkali metal hydroxides; alkali metal alcoholates; and, tin mercaptides. Depending on the nature of the isocyanate, the amount of catalyst employed is generally in the range from 0.005 to 10% by weight of the mixture catalyzed.

The ratio of isocyanate groups to isocyanate-reactive groups used in the reaction should be such that the resulting pre-polymer has no free isocyanate-reactive groups but also that a reasonable advancement is obtained. Usually, the equivalent ratio of isocyanate groups to the isocyanate-reactive groups will reside in the range from 1.2:1 to 2:1, for example 1.4:1 to 1.6:1.

### Second Component (II)

In accordance with the present invention, the second component of the two-component (2K) composition comprises one or polyols, said polyols preferably having from 2 to 4 isocyanate-reactive hydroxyl moieties. The polyol may, for instance, be a mixture of one or more diols and one or more triols. And the polyols may include polyether polyols, polyester polyols, poly(alkylene carbonate)polyols, hydroxyl-containing polythioethers, polymer polyols, and mixtures thereof. The hydroxyl number of the polyhydroxy compounds is generally from 20 to 850 mg KOH/g and preferably from 25 to 500 mg KOH/g.

Whilst diols and triols of low molecular weights, for instance from 60 to 400 or 300, may be reactive towards isocyanates, these polyols are more typically used as starter molecules, chain extenders and / or crosslinking agents in a reaction mixture which contains one or more further active hydrogen compounds. In this regard, mention may be made: aliphatic, cycloaliphatic and/or araliphatic diols having from 2 to 14 and preferably from 4 to 10 carbon atoms, such as ethylene glycol, 1,3-propanediol, 1,4-butanediol, 1,6-hexanediol, 1,10-decanediol, o-, m- and p-dihydroxycyclohexane; diethylene glycol; dipropylene glycol; bis(2-hydroxyethyl)hydroquinone; and, triols, such as 1,2,4-, and 1,3,5-trihydroxycyclohexane, glycerol and trimethylolpropane.

Polyether polyols are well-known in the art and include polyoxyethylene, polyoxypropylene, polyoxybutylene, and polytetramethylene ether diols and triols. The polyether polyols may generally have molecular weights of from 400 to 10,000, for example from 1000 to 7000, and be prepared by polymerizing alkylene oxides in the presence of an active hydrogen-containing initiator compound, as described in US Patent Nos. 4,269,9945,4,218,543 and 4,374,210 for instance. The alkylene oxide monomers are typically selected from the group consisting of: ethylene oxide; propylene oxide; butylene oxides; styrene oxide; epichlorohydrin; epibromohydrin; and, mixtures thereof. The active hydrogen initiators are in turn typically selected from the group consisting of: water; ethylene glycol; propylene glycol; butanediol; hexanediol; glycerin; trimethylol propane; pentaerythritol; hexanetriol; sorbitol; sucrose; hydroquinone; resorcinol; catechol; bisphenols; novolac resins; phosphoric acid; amines; and mixtures thereof. Good examples of polyether polyols which are useful preparing the polyurethane pre-polymer of the present invention are the ethylene oxide-capped polyols prepared by reacting glycerine with propylene oxide, followed by reacting the product with ethylene oxide.

As is known in the art, polyester polyols may be prepared by reacting a polycarboxylic acid or anhydride thereof with a polyhydric alcohol. Examples of suitable polycarboxylic acids include succinic acid, adipic acid, suberic acid, azelaic acid, sebacic acid, phthalic acid, isophthalic acid, maleic acid, trimellitic acid, phthalic acid anhydride, tetrahydrophthalicacid anhydride, hexahydrophthalicacid anhydride, tetrachlorophthalicacid anhydride, endomethylene tetrahydrophthalic acid anhydride, maleic acid anhydride, glutaric acid anhydride, fumaric acid, and mixtures thereof. Examples of polyhydric alcohols which are useful in preparing polyester polyols include ethylene glycols, propane diols, butane diols, 1,6-hexanediol, 1,8-octanediol, neopentylglycol, glycerol, trimethylol propane, pentaerythritol, quinitol, mannitol, sorbitol, methyl glycoside, diethylene glycol, triethylene glycol, tetraethylene glycol, polyethylene glycols, polypropylene glycols, and mixtures thereof. As regards the present invention, useful polyester polyols will typically have molecular weights of from 1200 to 3000.

The use of amine polyols as the active hydrogen moiety is not precluded. This group includes the low molecular weight polyols, such as diethanol amine, triethanol amine and N-methyl-N,N'-diethanol amine, but also amine polyols obtained by the addition reaction of an amino compound such as ethylenediamine, 1,3-propanediamine and 1,6-hexanediamine with an alkylene oxide (e.g., propylene oxide (PO) and ethylene oxide (EO). As examples of suitable amine polyols, or specifically ethylene diamine-initiated polyols, may be mentioned those under the Synerponic™ T brand polyols and Synerponic™ V304 polyol (available from Croda International).

Polymer polyols which find utility as the active hydrogen moiety (A) include dispersions of (co)polymers of vinyl monomers in a continuous polyol phase as described in *inter alia* US Patent Nos. 4,390,645, 4,463,107, 4,148,840 and 4,574,137. Also useful are styrene/acrylonitrile (SAN) copolymer polyols, polyisocyanate polyaddition (PIPA) polyols (dispersions of polyurea-polyurethane particles in a polyol) and the polyurea dispersions in polyols (PHD polyols).

In an embodiment of the present invention, the reactant polyol(s) have an average functionality of at least 1.5, preferably at least 1.8 and more preferably at least 2.0, but no greater than 4.0, preferably no greater than about 3.5 and more preferably no greater than 3.0. Independently or additionally, the equivalent weight of the reactant polyol(s) is at least 200, preferably at least 500 and more preferably at least about 1,000 but no greater than 5000, preferably no greater than 3000 and more preferably no greater than 2500.

### Latent Catalyst System

The metal-free, latent catalyst of the present invention may be disposed in one or both of the first (I) and second (II) components. However, it is preferred that said latent catalyst is disposed exclusively in the second component (II) of the composition. In any event, the latent catalyst is desirably used in an amount of from 0.01 to 10 wt.%, and preferably from 0.01 to 5 wt.%, based on the total weight of the two component composition.

At its broadest, the metal-free, latent catalyst which is activatable under ultraviolet irradiation may be defined as a catalyst comprising at least one nitrogen heterocyclic compound bearing an aromatic photoremovable group, the release of said group under UV irradiation yielding a tertiary amine. Without being bound by theory, the basic tertiary amine catalyzes both the aromatic isocyanate-hydroxyl reaction and, where moisture is present or can migrate into contact with the adhesive mixture, aromatic isocyanate-water reactions.

In an important aspect of the present invention, the metal-free latent catalyst is a monocyclic or bicyclic nitrogen heterocycle in which said aromatic photoremovable group (PRG) is directly bonded to a nitrogen disposed in a ring and is represented by the formula:

-CR¹R²-Ar (PRG)

wherein:
R¹ and R² are independently of one another hydrogen or C1-C6 alkyl;
Ar represents an aryl group having from 6 to 18 ring carbon atoms, which aryl group may be unsubstituted or may be substituted by one of more C1-C6 alkyl group, C2-C4 alkenyl group, CN, OR³, SR³, CH₂OR³, C(O)R³, C(O)OR³ or halogen; and,
where present, each R³ is independently selected from the group consisting of hydrogen, C1-C6-alkyl and phenyl.
The monocyclic or bicyclic nitrogen heterocycle may be unsaturated or saturated.

Monocyclic nitrogen heterocycles will preferably be characterized by comprising from 3 to 9 atoms or more preferably from 5 to 9 atoms. Said 5 to 9 membered monocyclic rings should further be characterized by having 1, or 3 nitrogen heteroatoms therein.

Bicyclic nitrogen heterocycles will have two fused rings and preferably be characterized by containing *in toto* from 7 to 12 atoms and from 1 to 4 nitrogen heteroatoms. Preferably at least one and more preferably both of the fused rings will contain 5 or 6 atoms. Nitrogen atoms may be disposed at the ring junctions of the bicyclic nitrogen heterocycles.

As regards the aforementioned general formula (PRG), it is preferred that:
At least one of R¹ and R² is hydrogen; and
Ar represents an aryl group having from 6 to 18 ring carbon atoms, which aryl group may be unsubstituted or may be substituted by one of more C1-C6 alkyl group, C2-C4 alkenyl group, C(O)R³ or halogen.

In certain exemplary embodiments, the metal-free latent catalyst is a compound represented by either: 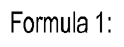 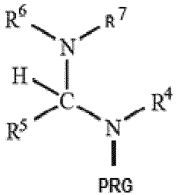 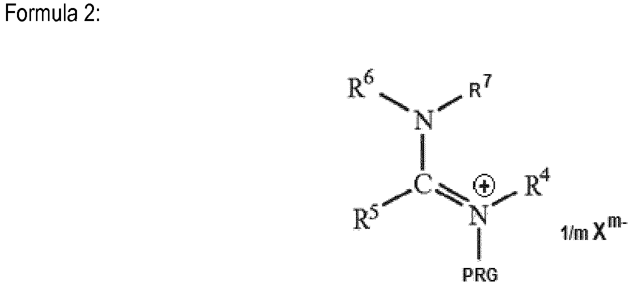 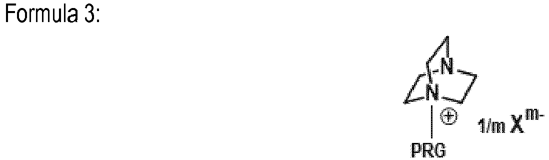 or, 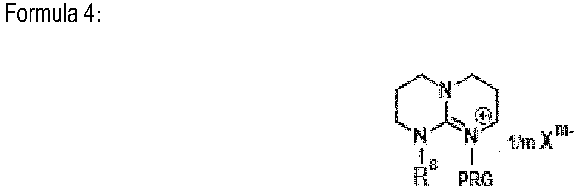 wherein:
PRG is as defined above;
R⁴ and R⁷ together form a C2-C6-alkylene bridge which is either unsubstituted or substituted by one or more C1-C4-alkyl;
R⁵ and R⁶ together form a C2-C6-alkylene bridge which is either unsubstituted or substituted by one or more C1-C4-alkyl;
R⁸ is a hydrogen, C1-C6 alkyl or phenyl; and,
Xm- is a counter ion of anionic charge m selected from halides and non-coordinating anions comprising an element selected from boron, phosphorous or silicon.

In a further exemplary embodiment, said metal free latent catalyst is a compound represented by Formula 5: 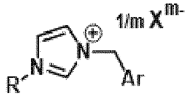 wherein:
R is hydrogen, C1-C6 alkyl or phenyl; and,
Xm- is a counter ion of anionic charge m selected from halides and non-coordinating anions comprising an element selected from boron, phosphorous or silicon.

Said non-coordinating anions consist, typically, of a compound of said elements (B, P or Si) having a formal valence m' with more than m' radicals which independently may be: a hydride radical; a bridged or unbridged dialkylamido radical; an alkoxide and aryloxide radical; a hydrocarbyl or substituted hydrocarbyl radical; or, a halocarbyl or substitued halocarbyl radical. The charge of the anion equals the number of radicals minus the formal valence (m') of the (metalloid) element. The disclosure of US Patent No. 5,198,401 may be instructive on suitable non-coordinating anions of the elements B, P and Si.

For illustration, suitable boron-containing anions include: tetra(phenyl)borate; tetra(p-tolyl)borate; tetra(o-tolyl)borate; tetra(pentafluorphenyl)borate; tetra(o,p-dimethylphenyl)borate; tetra(m,m-dimethylphenyl)borate; and, tetra(p-trifluoromethylphenyl)borate.

Without intention to limit the present invention, good results have been obtained using a latent catalyst selected from the group consisting of: 9-(anthracen-9-ylmethyl)-1-ethyl-2,3,4,6,7,8-hexahydro-pyrimido[1,2-a]pyrimidinium tetraphenyl borate; 1-methyl-3-(2-oxo-2-phenylethyl)-imidazolium bromide; 1-(2-oxo-2-phenylethyl)-1,4-diazabicyclo[2.2.2]octan-1-ium tetraphenylborate; 1-(anthracen-9-ylmethyl) decahydropyrimido [1,2-a] azepine; and, mixtures thereof.

### Additives and Adjunct Ingredients

As is standard in the art, the two component composition may comprise additives and adjunct ingredients which may be disposed in one or both of the first and second components. Suitable additives and adjunct ingredients include: co-catalysts; antioxidants; UV absorbers/light stabilizers; metal deactivators; antistatic agents; reinforcers; fillers; antifogging agents; propellants; biocides; plasticizers; lubricants; emulsifiers; dyes; pigments; rheological agents; impact modifiers; adhesion regulators; optical brighteners; flame retardants; anti-drip agents; nucleating agents; wetting agents; thickeners; protective colloids; defoamers; tackifiers; solvents; reactive diluents; and, mixtures thereof. The selection of suitable conventional additives for the composition of the invention depends on the specific intended use of the 2-component composition and can be determined in the individual case by the skilled artisan.

Fillers included in the two component composition can be organic or inorganic in nature. Inorganic fillers, such as carbon black, calcium carbonate, titanium dioxide and may find utility where the two component composition is used as a sealant. Further, highly dispersed silicas, especially pyrogenic silicas or precipitated silicas, may find particular utility as inorganic fillers due to their thixotropic effect. These examples aside, it is preferred that inorganic fillers are present in the form of platelets, which can be aligned to form layers with an intensified barrier effect in regard to fluids and gases. Phyllosilicates such as montmorillonite and hectorite, provide examples thereof and are described *inter alia* in WO 2011/089089 (Bayer Material Science AG), WO 2012/175427 (Bayer IP GMBH) and WO 2012/175431 (Bayer IP GMBH). Most preferred are phyllosilicates that have a layer thickness of from 0.5 to 5 nm, for example from 0.5 to 1.5 nm and an aspect ratio of at least 50, at least 400, at least 1000 or even at least 10,000.

The phyllosilicates can be of natural or synthetic origin. Suitable phyllosilicates are include but are not limited to montmorillonite, bentonite, kaolinite, mica, hectorite, fluorohectorite, saponite, beidellite, nontronite, stevensite, vermiculite, fluorovermiculite, halloysite, volkonskoite, suconite, magadiite, sauconite, stibensite, stipulgite, attapulgite, illite, kenyaite, smectite, allevardite, muscovite, palygorskite, sepiolite, silinaite, grumantite, revdite, zeolite, Fuller's earth, natural or synthetic talk or mica, or permutite. Particularly preferred are montmorillonite (aluminum magnesium silicate), hectorite (magnesium lithium silicate), synthetic fluorohectorite and exfoliated, organically modified smectites. The phyllosilicates can be modified or unmodified, in the latter case cationically modified phyllosilicates being preferred. Cationically modified means that inorganic cations of the phyllosilicate are exchanged at least in part by organic cations, said organic cations being organic compounds that possess at least one cationic group, such as a quaternary ammonium group, phosphonium group, pyridinium group or the like.

Where employed, light stabilizers / UV absorbers, antioxidants and metal deactivators should preferably have a high migration stability and temperature resistance. They may suitable be selected, for example, from the groups a) to t) listed herein below, of which the compounds of groups a) to g) and i) represent light stabilizers/UV absorbers and compounds j) to t) act as stabilizers: a) 4,4-diarylbutadienes; b) cinnamic acid esters; c) benzotriazoles; d) hydroxybenzophenones; e) diphenyl cyanoacrylates; f) oxamides; g) 2-phenyl-1,3,5-triazines; h) antioxidants; i) nickel compounds; j) sterically hindered amines; k) metal deactivators; I) phosphites and phosphonites; m) hydroxylamines; n) nitrones; o) amine oxides; p) benzofuranones and indolinones; q) thiosynergists; r) peroxide-destroying compounds; s) polyamide stabilizers; and t) basic co-stabilizers.

The two-component composition should comprise less than 5 wt.% of water, based on the weight of the composition, and is most preferably an anhydrous composition. These embodiments do not preclude the composition from either comprising organic solvent or being essentially free of organic solvent. In an interesting embodiment, the two component composition may be characterized by comprising, based on the weight of the two component composition: less than 5 wt.%, preferably less than 2 wt.% of water; and, less than 20 wt.%, preferably less than 10 wt.% of organic solvent.

Broadly, all organic solvents known to the person skilled in the art can be used as a solvent but it is preferred that said organic solvents are selected from the group consisting of: esters; ketones; halogenated hydrocarbons; alkanes; alkenes; and, aromatic hydrocarbons. Exemplary solvents are dichloromethane, trichloroethylene, toluene, xylene, butyl acetate, amyl acetate, isobutyl acetate, methyl isobutyl ketone, methoxybutyl acetate, cyclohexane, cyclohexanone, dichlorobenzene, diethyl ketone, di-isobutyl ketone, dioxane, ethyl acetate, ethylene glycol monobutyl ether acetate, ethylene glycol monoethyl acetate, 2-ethylhexyl acetate, glycol diacetate, heptane, hexane, isobutyl acetate, isooctane, isopropyl acetate, methyl ethyl ketone, tetrahydrofuran or tetrachloroethylene or mixtures of two or more of the recited solvents.

A general procedure for producing the two-component polyurethane composition according to the invention may be outlined as follows. The polyol component (II) is typically produced first: liquid polyols may be mixed and then, optionally, solid components are dissolved or dispersed in the mixture. This may also be supported by heating. Next the additives are added and dispersed. The mixing step may be supported by heating but it is, in any event, preferred that the moisture content of the mixture is kept low by, for example, using desiccants such as zeolites or by drying *in vacuo.* As noted previously, some of the inert additives may also be added to the isocyanate component.

The two components [(I), (II)] are stored separately until they are used. These two components are mixed together using known and conventional means in an essentially known manner for use and, expeditiously, the mixture is applied to the substrate to be bonded.

For certain coatings applications, the mixing step may be effected by mixing the two components by hand or by machine in pre-determined amounts. For instance, for small-scale applications in which volumes of less than 1 liter will generally be used, the preferred packaging for the two component compositions will be side-by-side double cartridges or coaxial cartridges, in which two tubular chambers are arranged alongside one another or inside one another and are sealed with pistons: the driving of these pistons allows the components to be extruded from the cartridge, advantageously through a closely mounted static or dynamic mixer. For larger applications, particularly for applications in industrial manufacture, the two components of the composition may advantageously be stored in drums or pails: in this case the two components are extruded via hydraulic presses, in particular by way of follower plates, and are supplied via pipelines to a mixing apparatus which can ensure fine and highly homogeneous mixing of the two components. In any event, for any package it is important that the first component (I) be disposed with a moisture-tight - ideally air-tight - seal so that both components can be stored for a long time, ideally for 12 months or longer.

The two-component polyurethane composition according to the invention should have a viscosity in mixed form of 100 to 3000 mPa.s, preferably 100 to 1500 mPa.s, as measured at a temperature of 20°C and determined immediately after mixing, for example, up to two minutes after mixing.

The two-component polyurethane compositions according to the present invention typically cure in less than a minute, and commonly between 10 and 20 seconds when irradiated using commercial UV curing equipment. Before UV activation they additionally demonstrate a long pot life, typically of at least 60 minutes and commonly of at least 90 or 120 minutes. The pot life shall be understood herein to be the time after which the viscosity of a mixture at 20°C will have risen to more than 50,000 mPas.

The compositions according to the invention are, in particular, suitable for use as laminating adhesives. The present invention thus also provides a method of forming a flexible film laminate, said method comprising the steps of: a) providing first and second flexible films; b) at a predetermined weight ratio, combining component (I) and component (II) of the composition as defined hereinabove to form a curable adhesive mixture; c) disposing the adhesive mixture on at least a portion of one surface of the first flexible film; d) joining the first flexible film and a second flexible film so that the curable adhesive mixture is interposed between the first flexible film and the second flexible film; and, e) simultaneously with or subsequent to said joining step, irradiating said adhesive mixture with ultraviolet light to cure said mixture.

As will be recognized by the skilled artisan, the predetermined weight ratio at which the two recited components are combined in step b) is selected to achieve the desired molar ratio of isocyanate (NCO) groups in component (I) to hydroxyl groups (OH) in component (II) of the composition: that NCO: OH molar ratio should typically be in the range from 0.8:1 to 2.5:1, preferably from 1.3:1 to 1.8:1.

The mixture formed in step b) may be disposed upon a surface of the first flexible film and optionally upon a surface of the second flexible film by any suitable method. Without intention to limit the present invention, conventional application methods include: brushing; dipping; roll coating using, for example, a 4-application roll equipment where the composition is solvent-free or a 2-application roll equipment for solvent-containing compositions; doctor-blade application; gravure coating; offset gravure coating; rotogravure coating; printing methods; and, spraying methods, including but not limited to air-atomized spray, air-assisted spray, airless spray and high-volume low-pressure spray. It is recommended that the compositions be applied to a wet film thickness of from 10 to 500 µm. The application of thinner layers within this range is more economical and provides for a reduced likelihood of thick cured regions. However, great control must be exercised in applying thinner coatings or layers so as to avoid the formation of discontinuous cured films.

The disposal step c) is typically performed at a temperature in the range of from -10°C to 150°C, preferably from 0°C to 100°C, and in particular from 10°C to 70°C. The temperature that is suitable depends *inter alia* on the substrate films, the composition of the components and the desired curing rate: the most appropriate temperature range can be determined in the individual case by the skilled artisan, using simple preliminary tests if necessary. Of course, performing step c) at temperatures of from 5°C to 35°C or from 20°C to 30°C is especially advantageous as it obviates the requirement to substantially heat or cool the adhesive mixture from the usually prevailing ambient temperature. Where applicable, however, the temperature of the mixture may be raised above the mixing temperature using conventional means.

As mentioned, the first flexible film and a second flexible film are joined so that the curable adhesive mixture is interposed between the first flexible film and the second flexible film. Depending on the films used in a lamination, the UV radiation necessary to cure the adhesive mixture can be passed through one or both films or, conversely, it may be necessary to irradiate the adhesive mixture when it is accessible in the joining step, that is prior to and during the mating of the film surfaces.

In the packaging applications for which the present invention is envisaged to be particularly suitable, the first and second flexible films will typically be constituted by polyethylene, polyester, polyethylene terephthalate, oriented polypropylene, ethylene vinylacetate, co-extruded films, metal foils and the like. Obviously, if the irradiation step e) is be performed subsequent to said joining step, this restricts the films used to ones that are UV transparent. Oriented polypropylene has proven to be an excellent film in this regard because it absorbs ≤ 10% of UV radiation. In contrast, polyethylene terephthalate based films absorb c. 40% of the UV radiation from an H-bulb and are not practical candidates for the curing of the adhesives of the present invention by UV irradiation of the adhesives through the film.

The irradiating ultraviolet light should typically have a wavelength of from 150 to 600 nm and preferably a wavelength of from 200 to 450 nm. Useful sources of UV light include, for instance, extra high pressure mercury lamps, high pressure mercury lamps, medium pressure mercury lamps, low intensity fluorescent lamps, metal halide lamps, microwave powered lamps, xenon lamps and laser beam sources such as excimer lasers and argon-ion lasers.

The amount of radiation necessary to cure the adhesive mixture composition will depend on a variety of factors including the angle of exposure to the radiation and the thickness of the coating. However, a curing dosage of from 5 to 500 mJ/cm², based on the area of the irradiated film, may be cited as being typical: curing dosages of from 10 to 200 mJ/cm², based on the area of the irradiated film, may be considered highly effective.

The following examples are illustrative of the present invention, and are not intended to limit the scope of the invention in any way.

### Examples

The following materials are used in the Examples:
- LIOFOL LA 6707:: Polyester Polyol having an OH number of ca.135 mgKOH/g and an Mw of ca. 2600 g/mol, available from Henkel AG & Co. KGaA.
- LIOFOL LA 7707:: NCO-pre-polymer (polyisocyanate) based on MDI, polyether polyols and castor oil, available from Henkel AG & Co. KGaA.

In each of the below mentioned Examples, the progress of the curing reactions was monitored using Fourier transform infrared spectroscopy (FTIR) in conjunction with Attenuated Total Reflection (ATR), hereinafter FTIR (ATR). For each FTIR absorption spectrum, the carbonyl peak was identified at around 1700 cm⁻¹ whilst the disappearance of the isocyanate peak at around 2270 cm⁻¹ was monitored. [The absorption peak of the carbonyl group does shift to a slightly higher wavenumber as the polyisocyanate content of the adhesive mixture declines.] Specifically, the ratio of the area of the peak at 2270 cm⁻¹ to the peak at around 1700 cm⁻¹ was quantified, the decline of which quantity over time correlates to the consumption of the polyisocyanate in the polyaddition reaction.

### Example 1:

1.5 g of LIOFOL LA 6707 was mixed with 27.7 mg of 9-(anthracen-9-ylmethyl)-1-ethyl-2,3,4,6,7,8-hexahydro-pyrimido[1,2-a]pyrimidinium tetraphenyl borate - the GUA derivative with 9-methylanthracene as aromatic pendant group and tetraphenylborate as counteranion (X) - and diluted together with 2 mL dichloromethane. 2 g of the polyisocyanate LIOFOL LA 7707 was diluted with dichloromethane and then mixed with the polyol solution. The mixture was divided into four portions (P1-P4) and each portion placed on a section of aluminium foil and spread with a coating bar (No.4). The solvent was allowed to evaporate and the adhesive mixture was heated for 10 seconds at 50 °C with a heat gun. The coating average over the aluminium foil was 9 g/m².

The coated aluminium foil samples were then permitted to cure under the following conditions:
- P1:: No irradiation
- P2:: UV irradiation at a curing dosage of 70 mJ/cm²
- P3:: UV irradiation at a curing dosage of 100 mJ/cm²
- P4:: UV irradiation at a curing dosage of 150 mJ/cm²

A secondary adhesive mixture (C1) was prepared as above with the exception that the latent catalyst was excluded from the polyol component. This mixture was then applied to an aluminium foil in the same manner and permitted to cure under ambient conditions and without UV irradiation.

The results of the FTIR (ATR) monitoring of the curing of the adhesive mixtures are shown in Table 1 herein below.

**Table 1**

| C1 | | P1 | | P2 | | P3 | | P4 | |
|---|---|---|---|---|---|---|---|---|---|
| Time (min) | **Peak Ratio** | Time (min) | **Peak Ratio** | Time (min) | **Peak Ratio** | Time (min) | **Peak Ratio** | Time (min) | **Peak Ratio** |
| 5 | **13.1** | 5 | **11.7** | 8 | **9.6** | 9 | **9.5** | | |
| 10 | **12.7** | 10 | **11.3** | 11 | **8.4** | 12 | **8.4** | 10 | **10.0** |
| 17 | **11.8** | 16 | **10.7** | 17 | **6.9** | 18 | **7,28** | 19 | **7.7** |
| 23 | **11.5** | 23 | **10.4** | 23 | **6.3** | 24 | **6.3** | 22 | **7.0** |
| 25 | **11.1** | 25 | **10.4** | 26 | **6.0** | 27 | **5.8** | 25 | **6.7** |
| 28 | **11.1** | 28 | **10.2** | 29 | **5.3** | 30 | **5.5** | 27 | **6.4** |
| 31 | **11.0** | 31 | **10.1** | 31 | **5.2** | 32 | **5.6** | 30 | **5.8** |
| 41 | **10.2** | 41 | **9.4** | 42 | **5.0** | 43 | **4.3** | 44 | **4.8** |
| 75 | **8.7** | 77 | **8.6** | 77 | **3.5** | 78 | **2.9** | 79 | **3.0** |

### Example 2

1.5 g of LIOFOL LA 6707 was mixed with 16.9 mg 1-methyl-3-(2-oxo-2-phenylethyl)-imidazolium bromide - the methyl imidazolium derivative with acetophenyle as aromatic pendant group and bromide as counteranion - and diluted together with 2 mL dichloromethane. 2 g of the polyisocyanate LIOFOL LA 7707 was diluted with dichloromethane and then mixed with the polyol solution. The mixture was divided into four portions (Q1-Q4) and each portion placed on a section of aluminium foil and spread with a coating bar (No.4). The solvent was allowed to evaporate and the adhesive mixture was heated for 10 seconds at 50 °C with a heat gun. The coating average over the aluminium foil was 9 g / m².

The coated aluminium foil samples were then permitted to cure under the following conditions:
- Q1:: No irradiation
- Q2:: UV irradiation at a curing dosage of 400 mJ/cm²
- Q3:: UV irradiation at a curing dosage of 600 mJ/cm²
- Q4:: UV irradiation at a curing dosage of 800 mJ/cm²

A secondary adhesive mixture (C1) was prepared as above with the exception that the latent catalyst was excluded from the polyol component. This mixture was then applied to an aluminium foil in the same manner and permitted to cure under ambient conditions and without UV irradiation.

The results of the FTIR (ATR) monitoring of the curing of the adhesive mixtures are shown in Table 2 herein below.

**Table 2**

| C1 | | Q1 | | Q2 | | Q3 | | Q4 | |
|---|---|---|---|---|---|---|---|---|---|
| Time (min) | **Peak Ratio** | Time (min) | **Peak Ratio** | Time (min) | **Peak Ratio** | Time (min) | **Peak Ratio** | Time (min) | **Peak Ratio** |
| 5 | **13.1** | 6 | **12.3** | 2 | **11.4** | | | | |
| 10 | **12.7** | | | | | | | | |
| 17 | **11.8** | | | | | | | | |
| 23 | **11.5** | | | | | | | | |
| 25 | **11.1** | | | | | | | | |
| 28 | **11.1** | | | | | | | | |
| 31 | **11.0** | | | | | | | | |
| 41 | **10.2** | | | 53 | **6.8** | 48 | **6.6** | 57 | **6.6** |
| 75 | **8.7** | 64 | **7.2** | 73 | **5.7** | 70 | **5.8** | 77 | **5.0** |

### Example 3

1.5 g of LIOFOL LA 6707 was mixed with 1-(2-oxo-2-phenylethyl)-1,4-diazabicyclo[2.2.2]octan-1-ium tetraphenylborate - the DABCO derivative with acetophenyle as aromatic pendant group and tetraphenylborate as counteranion - and diluted together with 2 mL dichloromethane. 2 g of the polyisocyanate LIOFOL LA 7707 was diluted with dichloromethane and then mixed with the polyol solution. The mixture was divided into four portions (S1-S4) and each portion placed on a section of aluminium foil and spread with a coating bar (No.4). The solvent was allowed to evaporate and the adhesive mixture was heated for 10 seconds at 50 °C with a heat gun. The coating average over the aluminium foil was 9 g / m².

The coated aluminium foil samples were then permitted to cure under the following conditions:
- S1:: No irradiation
- S2:: UV irradiation at a curing dosage of 150 mJ/cm²
- S3:: UV irradiation at a curing dosage of 300 mJ/cm²
- S4:: UV irradiation at a curing dosage of 600 mJ/cm²

A secondary adhesive mixture (C1) was prepared as above with the exception that the latent catalyst was excluded from the polyol component. This mixture was then applied to an aluminium foil in the same manner and permitted to cure under ambient conditions and without UV irradiation.

The results of the FTIR (ATR) monitoring of the curing of the adhesive mixtures are shown in Table 3 herein below.

**Table 3**

| C1 | | S1 | | S2 | | S3 | | S4 | |
|---|---|---|---|---|---|---|---|---|---|
| Time (min) | **Peak Ratio** | Time (min) | **Peak Ratio** | Time (min) | **Peak Ratio** | Time (min) | **Peak Ratio** | Time (min) | **Peak Ratio** |
| 5 | **13.1** | 5 | **12.3** | 6 | **11.6** | 8 | **11.0** | | |
| 10 | **12.7** | 11 | **12.0** | 11 | **9.3** | 10 | **9.7** | 10 | **10.0** |
| 17 | **11.8** | 17 | **11.7** | 18 | **9,3** | 18 | **9.0** | 16 | **7.3** |
| 23 | **11.5** | | | | | | | | |
| 25 | **11.1** | | | | | | | | |
| 28 | **11.1** | | | | | | | | |
| 31 | **11.0** | 30 | **11.2** | 31 | **7.8** | 31 | **6.9** | 32 | **6.1** |
| 41 | **10.2** | | | 39 | **6.6** | 39 | **5.8** | 41 | **5.2** |
| 75 | **8.7** | 69 | **9.0** | 70 | **5.3** | 71 | **4.8** | 72 | **4.3** |

### Example 4

1.5 g of LIOFOL LA 6707 was mixed with 1-(anthracen-9-ylmethyl) decahydropyrimido [1,2-a] azepine - the DBU derivative with 9-methylanthracene as aromatic pendant group - and diluted together with 2 mL dichloromethane. 2 g of the polyisocyanate LIOFOL LA 7707 was diluted with dichloromethane and then mixed with the polyol solution. The mixture (T1) was placed on a section of aluminium foil and spread with a coating bar (No.4). The solvent was allowed to evaporate and the adhesive mixture was heated for 10 seconds at 50 °C with a heat gun. The coating average over the aluminium foil was 9 g / m².

The coated aluminium foil sample was then permitted to cure under the following conditions:
- T1:: UV irradiation at a curing dosage of 300 mJ/cm²

A secondary adhesive mixture (C1) was prepared as above with the exception that the latent catalyst was excluded from the polyol component. This mixture was then applied to an aluminium foil in the same manner and permitted to cure under ambient conditions and without UV irradiation.

The results of the FTIR (ATR) monitoring of the curing of the adhesive mixtures are shown in Table 4 herein below.

**Table 4**

| C1 | | T1 | |
|---|---|---|---|
| Time (min) | **Peak Ratio** | Time (min) | **Peak Ratio** |
| 5 | **13.1** | 6 | **12.3** |
| 10 | **12.7** | 11 | **11.3** |
| 17 | **11.8** | 17 | **10.8** |
| 23 | **11.5** | 23 | **10.2** |
| 25 | **11.1** | 25 | **10.1** |
| 28 | **11.1** | 28 | **9.8** |
| 31 | **11.0** | 32 | **9.5** |
| 41 | **10.2** | 41 | **9.0** |
| 75 | **8.7** | | |

### Example 5

1.5 g of LIOFOL LA 6707 was mixed with 9.2 mg 9-(anthracen-9-ylmethyl)-1-ethyl-2,3,4,6,7,8-hexahydropyrimido[1,2-a]pyrimidinium tetraphenyl borate - the GUA derivative with 9-methylanthracene as aromatic pendant group and tetraphenylborate as counteranion - and diluted together with 2 mL dichloromethane. 2 g of the polyisocyanate LIOFOL LA 7707 was diluted with dichloromethane and then mixed with the polyol solution. The mixture was divided into three portions (U1-U3) and each portion was placed on a section of aluminium foil and spread with a coating bar (No.4). The solvent was allowed to evaporate and the adhesive mixture was heated for 10 seconds at 50 °C with a heat gun. The coating average over the aluminium foil was 9 g / m².

The coated aluminium foil samples were then permitted to cure under the following conditions:
- U1:: No irradiation
- U2:: UV irradiation at a curing dosage of 150 mJ/cm²
- U3:: UV irradiation at a curing dosage of 600 mJ/cm²

A secondary adhesive mixture (C1) was prepared as above with the exception that the latent catalyst was excluded from the polyol component. This mixture was then applied to an aluminium foil in the same manner and permitted to cure under ambient conditions and without UV irradiation.

The results of the FTIR (ATR) monitoring of the curing of the adhesive mixtures are shown in Table 5 herein below.

**Table 5**

| C1 | | U1 | | U2 | | U3 | |
|---|---|---|---|---|---|---|---|
| Time (min) | **Peak Ratio** | Time (min) | **Peak Ratio** | Time (min) | **Peak Ratio** | Time (min) | **Peak Ratio** |
| 5 | **13.1** | 5 | **12.4** | 6 | **11.6** | 9 | **10.7** |
| 10 | **12.7** | 10 | **11.5** | 10 | **10.7** | 11 | **9.9** |
| 17 | **11.8** | 17 | **10.7** | 17 | **9.5** | 17 | **9.1** |
| 23 | **11.5** | 23 | **9.9** | | | | |
| 25 | **11.1** | | | | | 25 | **8.1** |
| 28 | **11.1** | 28 | **9.4** | | | | |
| 31 | **11.0** | 31 | **9.3** | 32 | **7.6** | 30 | **7.7** |
| 41 | **10.2** | | | | | 38 | **7.0** |
| 75 | **8.7** | 66 | **6.3** | 67 | **4.5** | 68 | **4.8** |

### Example 6

The pot lives of the adhesive mixtures according to Examples 1-4 were studied. The experiments were performed by measuring the viscosity behaviour over time in the 2-component mixture containing the latent catalyst. The obtained values were compared to a non-containing catalyst sample (Comparative Example C2). Over a period of 1 hour- determined from the formation of the adhesive mixtures by the addition of the polyisocyanate component to the polyol component as described above - viscosity values were measured using a Parallel Plate Rheometer (Anton-Paar MCR-302) at 20 rpm and a temperature of 40°C.

The results obtained are included in Table 6 below:

**Table 6**

| **Adhesive Composition** | **Viscosity (mPa.s) at 30 minutes** | **Viscosity (mPa.s) at 60 minutes** |
|---|---|---|
| Example 1 | 5000 | 10000 |
| Example 2 | 4800 | 9200 |
| Example 3 | 5500 | 11400 |
| Example 4 | 5300 | 10000 |
| Comparative Example C2 | 4500 | 8600 |

## Claims

1. A two-component (2K) polyurethane composition comprising component (I) and component (II), wherein component (I) comprises an aromatic polyisocyanate and component (II) comprises a polyol,
said composition being **characterized in that** it comprises a metal-free, latent catalyst which is activatable under ultraviolet irradiation, said catalyst comprising at least one nitrogen heterocyclic compound bearing an aromatic photoremovable group, the release of said group under UV irradiation yielding a tertiary amine.

2. The composition according to claim 1, wherein the aromatic polyisocyanate of component (I) is selected from the group consisting of: 2,4-tolylene diisocyanate; 2,6-tolylene diisocyanate; 2,4'-methylene diphenyl diisocyanate; 4,4'-methylene diphenyl diisocyanate; 1,3-phenylene diisocyanate; and, 1,4-phenylene diisocyanate and mixtures thereof.

3. The composition according to claim 1, wherein the aromatic polyisocyanate of component (I) comprises a pre-polymer having free NCO groups, said pre-polymer being obtained from at least one reactant (A) comprising a compound reactive toward isocyanates and at least one reactant (B) comprising a compound bearing isocyanate group(s).

4. The composition according to claim 3, wherein said pre-polymer having free NCO groups is **characterized by**:
i) an NCO content of from 5 to 30%, preferably from 10 to 25% by weight, based on the pre-polymer;
ii) a functionality of from 2.0 to 3, preferably from 2.2 to 3; and,
iii) a viscosity at 20°C of from 300 to 35,000 mPa.s, preferably from 1000 to 10,000 mPa.s.

5. The composition according to claim 3 or claim 4, wherein said reactant (B) comprises an aromatic diisocyanate selected from the group consisting of: 2,4-tolylene diisocyanate; 2,6-tolylene diisocyanate; methylene diphenyl diisocyanate; 1,3- phenylene diisocyanate; and, 1,4-phenylene diisocyanate and mixtures thereof.

6. The composition according to any one of claims 1 to 5, wherein the polyol of component (11) comprises at least one polymeric compound **characterized by** one or both of:
an average OH functionality of from 1.5 to 4.0, preferably from 1.8 to 3.5; and,
an equivalent weight of from 200 to 5000, preferably from 500 to 2500 g/eq.

7. The composition according to any one of claims 1 to 6, wherein the molar ratio of isocyanate groups (NCO) in component (I) to hydroxyl groups (OH) in component (II) is in the range from 0.8:1 to 2.5:1, preferably from 1.3:1 to 1.8:1.

8. The composition according to any one of claims 1 to 7, wherein said metal-free, latent catalyst is disposed in component (II).

9. The composition according to any one of claims 1 to 8, wherein said metal-free latent catalyst is a monocyclic or bicyclic nitrogen heterocycle in which said aromatic photoremovable group (PRG) is directly bonded to a nitrogen disposed in a ring and is represented by the formula
-CR¹R²-Ar (PRG)
wherein:
R¹ and R² are independently of one another hydrogen or C1-C6 alkyl;
Ar represents an aryl group having from 6 to 18 ring carbon atoms, which aryl group may be unsubstituted or may be substituted by one of more C1-C6 alkyl group, C2-C4 alkenyl group, CN, OR³, SR³, CH₂OR³, C(O)R³, C(O)OR³ or halogen; and,
where present, each R³ is independently selected from the group consisting of hydrogen, C1-C6-alkyl and phenyl.

10. The composition according to claim 9, wherein:
At least one of R¹ and R² is hydrogen; and
Ar represents an aryl group having from 6 to 18 ring carbon atoms, which aryl group may be unsubstituted or may be substituted by one of more C1-C6 alkyl group, C2-C4 alkenyl group, C(O)R³ or halogen.

11. The composition according to claim 9 or claim 10, wherein said metal-free latent catalyst is a compound represented by either: 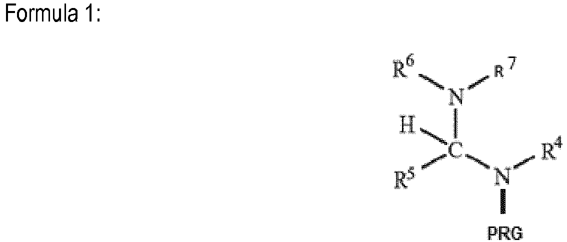 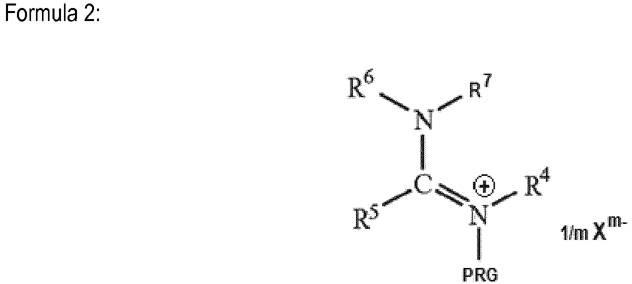 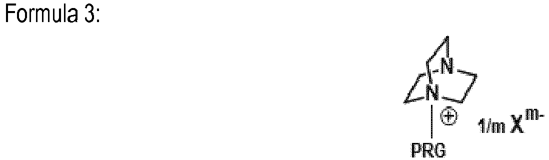 or, 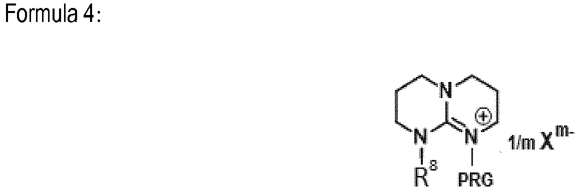 wherein:
R⁴ and R⁷ together form a C₂-C₆-alkylene bridge which is either unsubstituted or substituted by one or more C1-C4-alkyl;
R⁵ and R⁶ together form a C₂-C₆-alkylene bridge which is either unsubstituted or substituted by one or more C1-C4-alkyl;
R⁸ is a hydrogen, C1-C6 alkyl or phenyl; and,
Xm- is a counter ion of anionic charge m selected from halides and non-coordinating anions comprising an element selected from boron, phosphorous or silicon.

12. The composition according to claim 9 or claim 10, wherein said metal free latent catalyst is a compound represented by Formula 5: 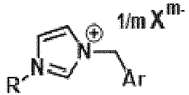 wherein:
R is hydrogen, C1-C6 alkyl or phenyl; and,
X^{m-} is a counter ion of anionic charge m selected from halides and non-coordinating anions comprising an element selected from boron, phosphorous or silicon.

13. Use of the two-component composition as defined in any one of claims 1 to 12, as an adhesive for laminating flexible films.

14. A method of forming a flexible film laminate, said method comprising the steps of:
providing first and second flexible films;
at a predetermined weight ratio, combining component (I) and component (II) of the composition as defined in any one of claims 1 to 12 to form a curable adhesive mixture;
disposing the adhesive mixture on at least a portion of one surface of the first flexible film;
joining the first flexible film and a second flexible film so that the curable adhesive mixture is interposed between the first flexible film and the second flexible film; and,
simultaneously with or subsequent to said joining step, irradiating said adhesive mixture with ultraviolet light to cure said mixture.

15. The method according to claim 14, wherein at least one of said first and second flexible films is transparent to ultraviolet light and the adhesive mixture is irradiated with ultraviolet light through transparent film.
